# EUROPÄISCHE PATENTSCHRIFT

(11) **EP 0 861 744 B1**
(45) Veröffentlichungstag und Bekanntmachung des Hinweises auf die Patenterteilung: **16.08.2001**
(21) Anmeldenummer: 98102242.9
(22) Anmeldetag: 10.02.1998
(51) Int. Cl.: B60G 21/05

(54) **Verbundlenker-Hinterachse für Kraftfahrzeuge**
Twist beam rear axle for motor vehicles
Essieu arrière à traverse déformable en torsion pour véhicule automobile

(30) Priorität: 26.02.1997 DE 19707643
(43) Veröffentlichungstag der Anmeldung: 02.09.1998
(73) Patentinhaber: Ford Global Technologies, Inc., A subsidiary of Ford Motor Company, Dearborn, Michigan 48126 (US)
(72) Erfinder: Betz, Christian, 51469 Bergisch-Gladbach (DE); Zhang, Tong, 50259 Pulheim (DE)
(74) Vertreter: Messulam, Alec Moses

(56) Entgegenhaltungen:
- EP-A- 0 552 537
- EP-A- 0 650 860
- EP-A- 0 743 205
- EP-A- 0 755 846
- DE-A- 4 441 971

## Beschreibung

Die Erfindung bezieht sich auf eine Verbundlenker-Hinterachse für Kraftfahrzeuge, mit einer biegesteifen, torsionsweichen Querstrebe, deren Enden mit biege- und torsionssteifen Längslenkern verbunden sind, welche eine Achsanlenkung und einen Radträger aufnehmen, gemäß dem Oberbegriff des Patentanspruchs 1.

Aus der DE-OS 44 41 971 ist eine Verbundlenker-Hinterachse für Kraftfahrzeuge der im Oberbegriff des Patentanspruchs erläuterten Art bekannt, wobei die Querstrebe aus einem die Lage des Schubmittelpunktes festlegenden Profilquerschnitt in Form eines Aluminiumstrangpreßprofiles gebildet ist, dessen nach unten offener U-förmiger Querschnitt an den freien Enden der Profilschenkel mit geschlossenen Profilkammern versehen ist.Die Enden der Querstrebe bilden hierbei nach Auftrennen, bzw. Entfernen eines Verbindungsstückes und Aufbiegen der beiden Profilschenkel nach außen Teilbereiche für die Längslenker, die durch das Schließen mit entsprechenden Formstücken entstehen.

Die bekannte Verbundlenker-Hinterachse hat den Nachteil, daß der U-förmige Querschnitt des Aluminiumstrangpreßprofiles der Querstrebe eine unerwünscht hohe Verwölbungskonstante aufweist, die die Dauerfestigkeit der Verbundlenker-Hinterachse beeinträchtigt. Bei wechselseitigem Einfedern und somit Verdrehen der Querstrebe kommt es im Übergangsbereich Querstrebe/Längslenker zu derart hohen Normalspannungen, daß bereits nach kurzer Zeit Risse auftreten. Zudem ist die erzielbare Torsionskonstante zu gering.

Die Aufgabe der Erfindung ist es, eine Verbundlenker-Hinterachse für Kraftfahrzeuge der im Oberbegriff des Patentanspruches erläuterten Art derart zu gestalten, daß durch einen entsprechend optimierten Profilquerschnitt der als Aluminiumstrangpreßprofil ausgebildeten Querstrebe eine möglichst geringe Verwölbungskonstante, eine hohe Biegesteifigkeit, insbesondere um die Vertikalachse, und eine erhöhte Torsionssteifigkeit erzielt werden. Darüber hinaus spielt auch die besondere Lage des Schubmittelpunktes eine gewisse Rolle.

Gemäß der Erfindung wird diese Aufgabe gelöst, indem eine Verbundlenker-Hinterachse für Kraftfahrzeuge der im Oberbegriff des Patentanspruch 1 erläuterten Art die im Kennzeichenteil des Patentanspruchs 1 aufgezeigten Merkmale aufweist.

Dadurch, daß der nach unten offene Querschnitt der Querstrebe aus einer Kombination von U- und V-Form besteht, wobei die Profilschenkel insgesamt eine Pfeilung nach oben aufweisen und der Profilquerschnitt auch an den geschlossenen Enden der Seitenschenkel sowie optional ebenfalls an der Basis mit geschlossenen Profilkammern versehen ist, wobei die oberen und unteren Profilkammern der Profilschenkel derart angeordnet und ausgebildet sind, daß ihre Wandungen jeweils eine etwa X-förmige Schleifenkontur aufweisen, wird eine Verbundlenker-Hinterachse für Kraftfahrzeuge geschaffen, die eine wesentlich reduzierte Verwölbungskonstante aufweist und deren Torsionskonstante nahezu verdoppelt ist.

In den weiteren Patentansprüchen sind noch vielfältige Merkmale aufgezeigt, die zu einer Optimierung der erfindungsgemäßen Verbundlenker-Hinterachse für Kraftfahrzeuge beitragen.

Die Erfindung wird anhand der in den beigefügten Zeichnungen gezeigten Ausführungsbeispiele näher erläutert. Es zeigt:
- Fig. 1: eine schematische Schrägrißdarstellung der erfindungsgemäßen Verbundlenker-Hinterachse;
- Fig. 2: eine schematische Schrägrißdarstellung des Übergangsbereiches von der Querstrebe zur Achsanlenkung und zum Längslenker;
- Fig. 3: eine schematische Schrägrißdarstellung einer weiteren Ausführung der Verbundlenker-Hinterachse mit einer anderen Ausbildung des Übergangsbereiches von der Querstrebe zur Achsanlenkung und zum Längslenker;
- Fig. 4: eine Ansicht des den Längslenker komplettierenden Formstückes mit integrierter Handbremsseilführung;
- Fig. 5: einen Teilschnitt im hinteren Bereich des Längslenkers mit einem einteiligen, als Strangpreßprofil ausgebildeten Radträger;
- Fig 6: einen Profilquerschnitt durch eine Querstrebe gemäß der Erfindung;
- Fig 7: einen weiteren Profilquerschnitt durch eine andere Ausführungsform der Querstrebe nach der Erfindung;
- Fig. 8: einen Profilquerschnitt durch eine Querstrebe gemäß der Erfindung mit erfindungsgemäßen Vorrichtungen zur Halterung von Bremsleitungen und ABS-Sensorkabeln.
- Fig. 9: einen Profilquerschnitt durch die Querstrebe gemäß der Erfindung mit einer zusätzlichen Profilkammer in der Basis und Vorrichtungen, die ein Verkleben anstelle einer Schweißung ermöglichen, und
- Fig. 10: eine Schrägrißdarstellung des Übergangsbereiches von der mit Klebenuten ausgeführten Querstrebe zur Achsanlenkung und zum Längslenker.

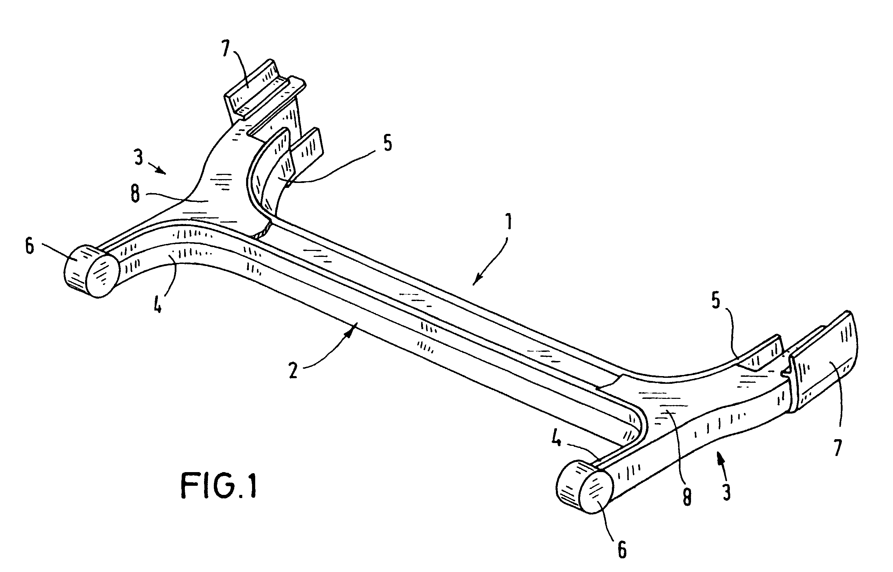

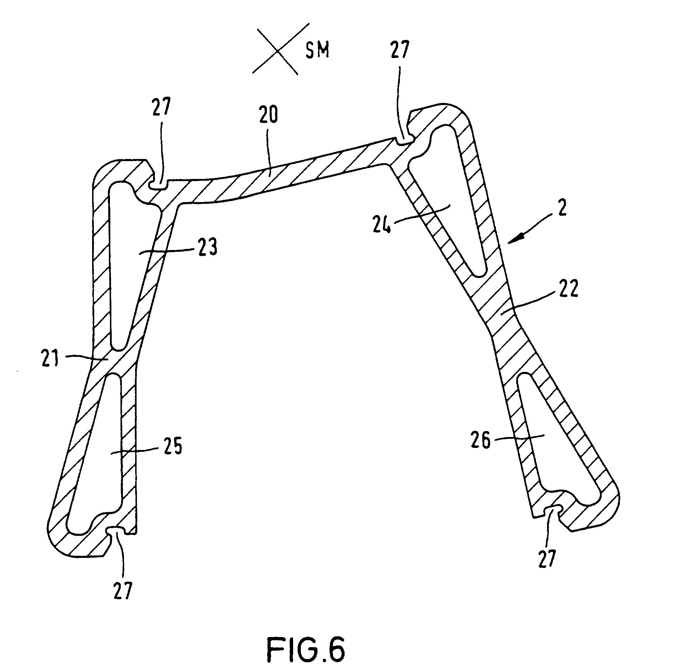

Die in Fig. 1 ersichtliche Verbundlenker-Hinterachse 1 besteht im wesentlichen aus einer Querstrebe 2 mit einem nach unten offenen Querschnitt sowie den Längslenkern 3, welche je ein Anlenkauge 6 zur Befestigung der Verbundlenker-Hinterachse an der Kraftfahrzeugkarosserie und einen Radträger 7 zur Montage der von der Verbundlenker-Hinterachse geführten Räder aufnehmen. Eine Ausführungsform für einen geeigneten Profilquerschnitt der Querstrebe 2 ist in Fig. 6 dargestellt.

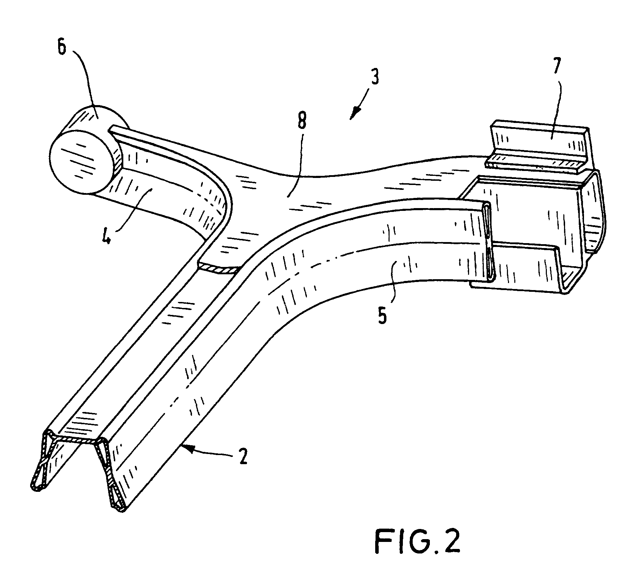

Wie auch aus Fig. 2 ersichtlich ist, werden die Längslenker 3 durch Teilbereiche der Querstrebe 2 gebildet, deren Enden durch vertikales Auftrennen und Umbiegen der beiden Profilschenkel nach vorne und hinten die innenliegenden Wandungen 4 und 5 der Längslenker 3 bilden, welche anschließend durch entsprechende Formstücke 8 geschlossen werden, die durch Schweißen oder Kleben formfest mit den abgebogenen Enden verbunden werden.

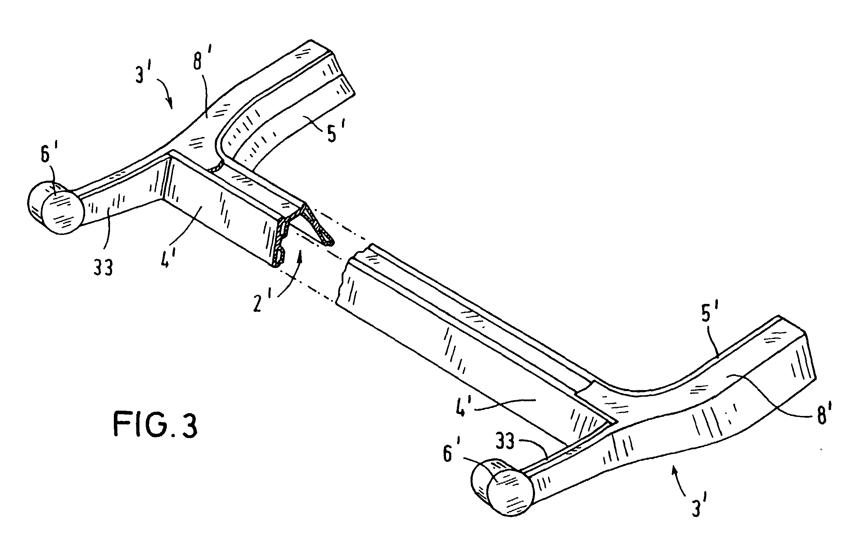

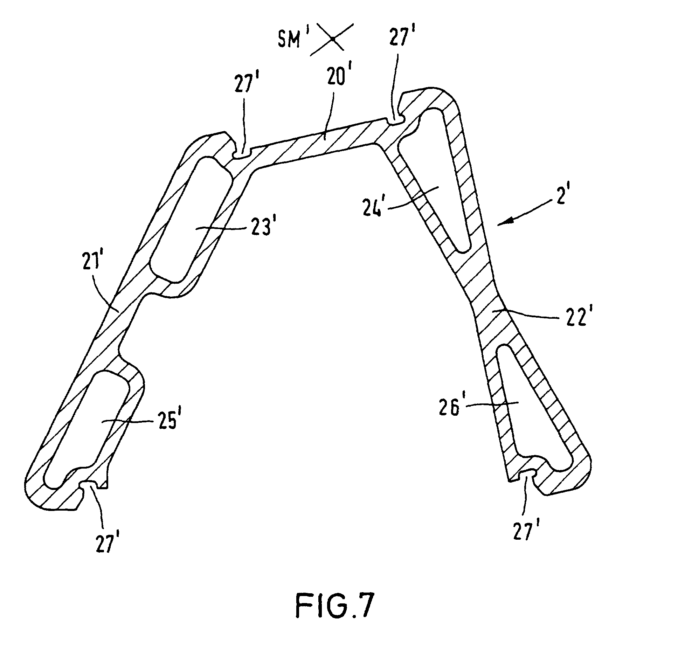

Fig.3 zeigt eine andere Ausführungsform der Verbundlenker-Hinterachse mit einem Profilquerschnitt gemäß Fig. 7. Der hierbei nicht aufgebogene vordere Profilschenkel 4' bzw. 21' in Fig. 7 der Querstrebe 2' wird annähernd bis zum Formstück 8' des Längslenkers 3' fortgeführt und dort stumpf abgeschnitten. Die Anbindung an den Längslenker 3' erfolgt über die Schweißbadstützen 27'; siehe Fig. 7 und über ein zusätzliches Schließblech 33. Aus konzeptioneller Sicht liegt der Hauptvorteil einer derartigen Konstruktion in einer möglichen Bauhöhenreduzierung des vorderen Bereichs des Längslenkers 3' und einem Bauraumgewinn durch Wegfall des vorderen Biegeradius der innenliegenden Wandung 4' des Längslenkers 3' (vgl. Fig. 1 und 2).

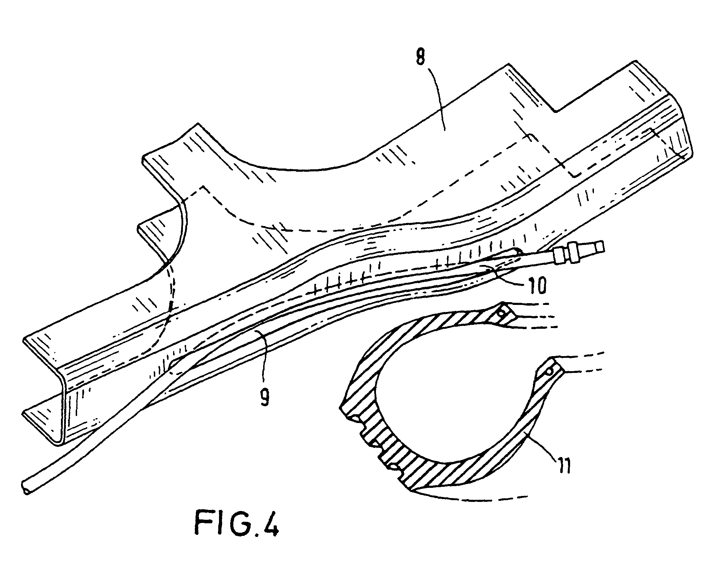

In Fig. 4 ist ein Formstück 8 für den Längslenker 3 ersichtlich. In das im Querschnitt U-förmige Formstück 8 ist eine Sicke 9 integriert, die als Führung des Handbremsseils 10 dient und dadurch eine optimale Raumausnutzung zum Reifen 11 hin ermöglicht und somit eine Auslegung mit maximierter Steifigkeit des Längslenkers zuläßt.

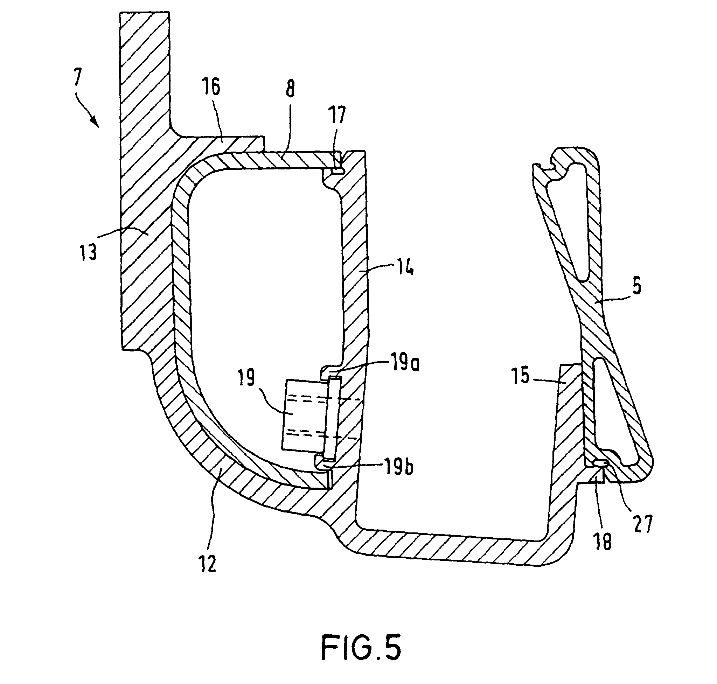

Fig. 5 zeigt die Verbindung des Radträgers 7 mit dem Längslenker 3, welcher in diesem hinteren Bereich von dem aufgebogenen Endbereich 5 der Querstrebe 2 und dem hier teilweise freigeschnittenen Formstück 8 gebildet wird.

Der Radträger 7 besteht aus einem einteiligen im Querschnitt etwa W-förmigen Strangpreßprofil, in welches die Radträgerplatte 13 und der Dämpferhalter 14 und 15 integriert sind. Die Radträgerplatte 13 liegt hierbei über einen zusätzlichen Schweißflansch 16 und eine bogenförmig verlaufende Wandung 12 formschlüssig an dem Längslenkerformstück 8 an. Die senkrechte Mittelwand 14 schließt mit einer Schweißtasche 17 an das Formstück 8 an und bildet dabei eine Seitenwand des nach oben offenen, U-förmigen Querschnitts für die Dämpferaufnahme. Die senkrechte Außenwand 15 wird über einen Schweißflansch 18 an eine Schweißtasche 27 des aufgebogenen hinteren Profilschenkels 5 der Querstrebe 2 durch Verschweißen angebunden. Die zur Verschraubung des unteren Dämpferlagers benötigte Mutter 19 wird vor der Montage in die an der Mittelwand 14 bereits angepreßten Einschublaschen 19a und 19b eingeschoben.

Durch die entsprechenden Anlageflächen des Radträgers 7 mit teils formschlüssiger Verbindung ergibt sich eine sehr stabile und günstige Anbindung an den hinteren Bereich des Längslenkers 3.

In Fig. 6 wird der besondere Profilquerschnitt der Querstrebe 2 näher erläutert. Die Querstrebe 2 besteht nunmehr aus einem nach unten offenen Querschnitt, welcher aus einer Kombination von U- und V-Form mit einer einfachwandigen Basis 20 und zwei doppelwandigen Profilschenkeln 21 und 22 gebildet wird. Die Profilschenkel 21 und 22 weisen obere und untere Profilkammern 23 und 24, bzw. 25 und 26 auf, die jeweils eine X-förmige Schleifenkontur der Wandungen bilden.

In die Profilschenkel 21 und 22 sind an ihren unteren Enden sowie an ihrem Übergang zur Basis 20 Schweißbadstützen oder Schweißtaschen 27 in Form von nutenförmigen Einschnitten integriert, um das spätere Verschweißen mit dem Formstück 8 bzw. dem Radträger 7 zu erleichtern. Durch eine zusätzliche Schrägstellung des hinteren Profilschenkels 22 ergibt sich eine vergrößerte Pfeilung beider Profilschenkel 21 und 22 zueinander, welche einer nochmaligen Reduktion der Verwölbungskonstante zuträglich ist.

Die schräge Anstellung des hinteren Profilschenkels 22 erlaubt zudem ein Aufbiegen des hinteren Längslenkerschenkels 5 aus der horizontalen Ebene der Querstrebe 2 nach oben, was es ermöglicht den Radträger 7 in die Längslenker 3 weitestgehend zu integrieren und somit für eine Material- und Gewichtsersparnis sorgt.

Durch eine geeignete Querschnittsgestaltung von Basis 20 und Profilschenkeln 21 und 22 ergibt sich die Lage des in den Figuren durch ein Kreuz SM bezeichneten Schubmittelpunktes, der für eine derartige Verbundlenker-Hinterachse sehr günstig liegt, da er durch seine hohe räumliche Lage Untersteuertendenzen fördert.

In Fig. 7 ist eine weitere Ausführungsform einer Querstrebe gezeigt, die im wesentlichen mit der Auslegung gemäß Fig. 6 übereinstimmt. Daher werden die gleichen Bezugszeichen verwendet, wobei diese zur Unterscheidung mit einem Strichindex versehen sind.

Der wesentliche Unterschied des Profilquerschnittes der Querstrebe 2' gegenüber der Querstrebe 2 in Fig. 6 besteht darin, daß nur einer der Profilschenkel 22' eine X-förmige Schleifenkontur aufweist, wohingegen der andere Profilschenkel 21' eine im wesentlichen parallelwandige Ausführung mit zwei Profilkammern 23' und 25' zeigt. Der flacher angestellte vordere Profilschenkel 21' bewirkt eine stärkere Pfeilung als dies bei der Querstrebe 2 der Fall ist. Dieses führt zu einer nochmaligen Reduzierung der Verwölbungskonstante.

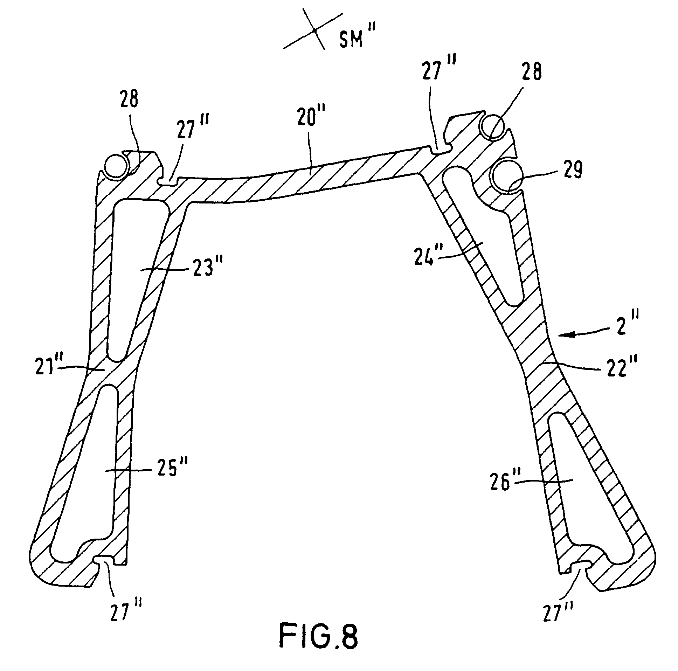

In Fig. 8 wird eine weitere Ausführungsform einer Querstrebe gemäß der Erfindung erläutert, die wieder mit den gleichen Bezugszeichen versehen und zu deren Unterscheidung ein Doppelstrichindex hinzugefügt ist.

Bei der in Fig. 8 gezeigten Querstrebe 2'', die im Grunde der in Fig. 6 gezeigten Querstrebe 2 entspricht, können durch die Herstellung als Strangpreßprofil zusätzlich zu den bereits integrierten Schweißtaschen 27'' weitere rinnenförmige Einschnitte 28 und 29 vorgesehen werden, die zur Halterung von Bremsleitungen und der Kabel von ABS-Sensoren dienen können.

Auf diese Weise kann nicht nur eine sehr leicht bauende und widerstandsfähige Verbundlenker-Hinterachse für Kraftfahrzeuge geschaffen werden, sondern auch deren Komplettierung durch notwendige Montagebauteile wird wesentlich vereinfacht.

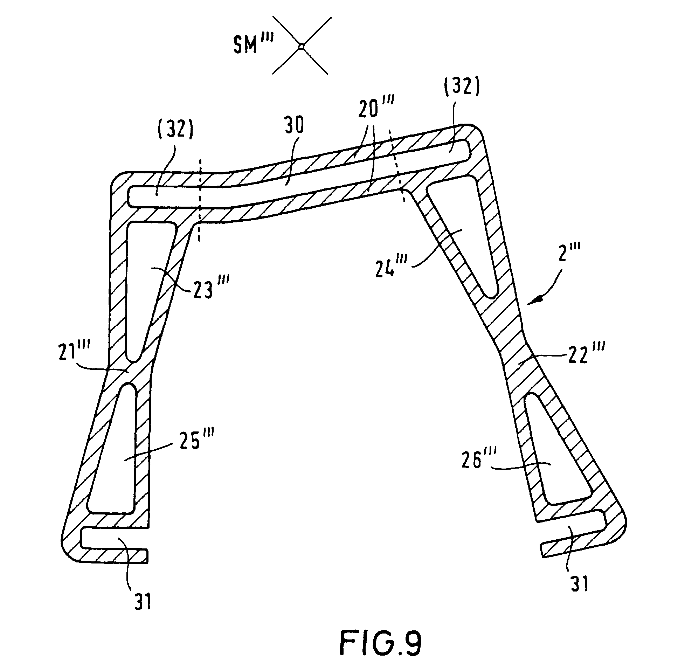

Fig. 9 zeigt eine alternative Ausführungsform der Querstrebe gemäß der Erfindung, wobei bei gleichen Bezugszeichen zu deren Unterscheidung ein Dreifachstrichindex hinzugefügt ist.

Die wesentlichen Unterschiede des Profilquerschnittes der Querstrebe 2''' gegenüber den bisherigen Ausführungsformen der Querstrebe 2, 2' und 2'' bestehen darin, daß nicht nur die Profilschenkel 21''' und 22''' je zwei Profilkammern 23''' und 25''' sowie 24''' und 26''' aufweisen, sondern auch die Basis 20''' eine Profilkammer 30 beinhaltet. Desweiteren sind anstelle der bisher als Schweißtaschen 27, 27', 27'' fungierenden rinnenförmigen Einschnitte an den unteren Enden der Profilschenkel 21''' und 22''' Nuten 31 ausgebildet, wobei sich nach einem vertikalen Trennen der Querstrebe 2''' entlang der in Fig. 9 durch gestrichelte Linien angedeuteten Bereichen, auch am oberen Ende der Profilschenkel aus der Profilkammer 30 der Basis 20''' ähnliche Nuten 32 ergeben, die dazu dienen, die Querstrebe 2''' mit einem entsprechenden Formstück (8''') durch Verkleben zu einem Längslenker 3'''zu schließen.

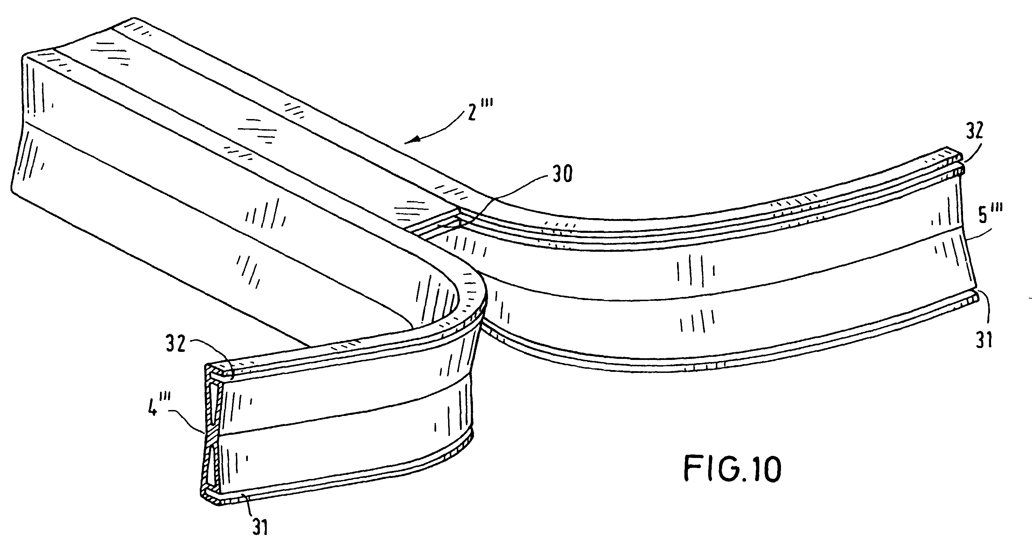

Fig. 10 zeigt eine derartige Querstrebe 2''' einer erfindungsgemäßen Verbundlenker-Hinterachse, bei der die Klebenuten 31 und 32 an den aufgebogenen Enden 4''' und 5''' sowie die Profilkammer 30 der Basis 20''' zum Verkleben mit dem den Längslenker 3''' bildenden Formstück dienen.

## Patentansprüche

1. Verbundlenker-Hinterachse für Kraftfahrzeuge, bestehend aus einer biegesteifen, torsionsnachgiebigen Querstrebe (2), welche mit biege- und torsionssteifen Längslenkern (3), die eine Achsanlenkung (6) und einen Radträger (7) aufnehmen, verbunden ist, wobei die Querstrebe (2) aus einem die Lage des Schubmittelpunktes (SM) festlegenden Aluminiumstrangpreßprofil besteht, dessen nach unten offener, U-förmiger, aus Profilschenkel (21 und 22) und Basis (20) gebildeter Profilquerschnitt an den freien Enden der Profilschenkel (21 und 22) geschlossene Kammern (25 und 26) aufweist, und wobei die Profilschenkel (21 und 22) an den Enden der Querstrebe (2) getrennt werden und durch Aufbiegen Teilbereiche der Längslenker (3) bilden, die durch entsprechende Formstücke (8) geschlossen werden,
**dadurch gekennzeichnet, daß**
- das Profil der Querstrebe (2) zwecks Minimierung der Verwölbungskonstante derart gestaltet ist, daß es eine Kombination von U- und V-Form aufweist, wobei seine Profilschenkel (21 und 22) insgesamt eine Pfeilung nach oben aufweisen, und
- die Profilschenkel (21 und 22) auch an ihren basisseitigen Enden, sowie optional auch die Basis (20) mit geschlossenen Profilkammern (23 und 24, bzw. 30) zur Einstellung der Torsionskonstante versehen sind.

2. Verbundlenker-Hinterachse für Kraftfahrzeuge, nach Anspruch 1
**dadurch gekennzeichnet, daß**
- beide Profilschenkel (4 und 5), welche aus der nach unten offenen Querstrebe (2) nach vorn und hinten aufgebogenen sind, aus der Ebene der Querstrebe nach oben abgebogen sind.

3. Verbundlenker-Hinterachse für Kraftfahrzeuge, nach Anspruch 1
**dadurch gekennzeichnet, daß**
- nur einer der Profilschenkel (4 oder 5), welche aus der nach unten offenen Querstrebe (2) nach vorn und hinten aufgebogenen sind, aus der Ebene der Querstrebe nach oben abgebogen ist.

4. Verbundlenker-Hinterachse für Kraftfahrzeuge, nach den Ansprüchen 1 bis 3
**dadurch gekennzeichnet,** daß
- nur ein Profilschenkel (4' oder 5') aus der nach unten offenen Querstrebe (2') nach vorn oder hinten aufgebogenen wird, wobei der aufgebogene Seitenschenkel entweder in der Ebene der Querstrebe oder aus der Ebene der Querstrebe nach oben abgebogen ist.

5. Verbundlenker-Hinterachse für Kraftfahrzeuge, nach den Ansprüchen 1 bis 4
**dadurch gekennzeichnet, daß**
- in dem Strangpreßprofil der Querstrebe (2'') neben den Schweißbadstützen (27'') weitere Nuten (28 und 29) ausgebildet sind, um z.B. ABS-Sensorkabel oder Bremsleitungen aufzunehmen.

6. Verbundlenker-Hinterachse für Kraftfahrzeuge, nach den Ansprüchen 1 bis 5
**dadurch gekennzeichnet, daß**
- in dem Strangpreßprofil der Querstrebe (2''') anstelle der Schweißbadstützen (27, 27', 27'') Profilkammern (30) und Nuten (31 und 32) derart ausgebildet sind, daß sie Querschnitte zum Bilden einer Klebeverbindung anstelle einer Schweißverbindung formen.

7. Verbundlenker-Hinterachse für Kraftfahrzeuge, nach den Ansprüchen 1 bis 6
**dadurch gekennzeichnet,** daß
- das Formstück (8) des Längslenkers (3) eine eingepreßte Sicke (9) aufweist, in der das Handbremsseil (10) geführt wird.

## Claims

1. Twist beam rear axle for motor vehicles, consisting of a flexurally strong, torsionally pliable cross wall (2), which is connected to flexurally strong and torsionally strong trailing arms (3), which receive an axle guide (6) and a wheel carrier (7), wherein the cross wall (2) consists of an aluminium extrusion fixing the position of the thrust middle point (SM), whose open below U-shaped profiled cross-section formed from profiled sides (21 and 22) and base (20) has on the free ends of the profiled sides (21 and 22) closed chambers (25 and 26), and wherein the profiled sides (21 and 22) are separated on the ends of the cross wall (2) and through bending up form sub-areas of the trailing arms (3), which are closed through corresponding plain fittings (8)
characterised in that
- the profile of the cross wall (2) for the purpose of minimising the warping constant is formed in such a way that it has a combination of a U-shape and a V-shape, wherein its profiled sides (21 and 22) all in all have a arrow going upwards, and
- the profiled sides (21 and 22) also on their base-side ends as well as optionally the base (20) are provided with closed profiled chambers (23 and 24 / 30) for the purpose of adjusting the torsion constant.

2. Twist beam rear axle for motor vehicles according to Claim 1
characterised in that
- both profiled sides (4 and 5) which out of the below open cross wall (2) are bent up forwards and backwards, are bent upwards out of the plane of the cross wall.

3. Twist beam rear axle for motor vehicles according to Claim 1
characterised in that
- only one of the profiled sides (4 or 5), which out of the below open cross wall (2) are bent up forwards and backwards, is bent upwards out of the plane of the cross wall.

4. Twist beam rear axle for motor vehicles according to Claims 1 to 3
characterised in that
- only one profiled side (4' or 5') out of the open below cross wall (2') is bent up forwards or backwards, wherein the bent up lateral side is bent upwards either in the plane of the cross wall or out of the plane of the cross wall.

5. Twist beam rear axle for motor vehicles according to Claims 1 to 4
characterised in that
- in the extrusion of the cross wall (2'') beside the molten pool supports (27'') further grooves (28 and 29) are formed, in order for example to receive ABS sensor cables or brake cables.

6. Twist beam rear axle for motor vehicles according to Claims 1 to 5
characterised in that
- in the extrusion of the cross wall (2''') instead of the molten pool supports (27, 27', 27'') profiled chambers (30) and grooves (31 and 32) are formed in such a way that they form cross-sections for forming a sticking connection instead of a welding connection.

7. Twist beam rear axle for motor vehicles according to Claims 1 to 6
characterised in that
- the plain fitting (8) of the trailing arm (3) has a pressed-in bead (9), in which the hand-brake cable (10) is guided.

## Revendications

1. Essieu arrière pour véhicules automobiles, composé d'une traverse (2) rigide en flexion et déformable en torsion qui est reliée à des bras oscillants longitudinaux (3) rigides en flexion et en torsion recevant une articulation d'essieu (6) et un support de roue (7), sachant que la traverse (2) est composée d'un profilé filé d'aluminium déterminant le centre de cisaillement (SM), dont la section transversale en forme de U, ouverte vers le bas et composée d'ailes de profilé (21 et 22) et d'une base (20), présente des chambres (25 et 26) fermées aux extrémités libres des ailes de profilé (21 et 22), et sachant que les ailes de profilé (21 et 22) se séparent aux extrémités de la traverse (2) et forment en s'écartant l'une de l'autre des parties des bras oscillants longitudinaux (3) qui sont fermées par des pièces moulées correspondantes (8), caractérisé en ce que
• pour minimiser la constante de gauchissement, le profilé de la traverse (2) est réalisé de manière à ce qu'il ait une forme combinant la forme d'un U et celle d'un V, sachant que ses ailes (21 et 22) forment dans l'ensemble une flèche vers le haut, et en ce que
• les extrémités des ailes de profilé (21 et 22) qui sont situées du côté de la base, ainsi que, éventuellement, la base (20) sont munies de chambres fermées (23 et 24, ou 30) afin de régler la constante de torsion.

2. Essieu arrière pour véhicules automobiles selon la revendication 1, caractérisé en ce que les deux ailes de profilé (4 et 5) qui s'écartent vers l'avant et vers l'arrière à partir de la traverse (2) ouverte vers le bas sont recourbées vers le haut à partir du plan de la traverse.

3. Essieu arrière pour véhicules automobiles selon la revendication 1, caractérisé en ce que seule une des ailes de profilé (4 ou 5) qui s'écartent vers l'avant et vers l'arrière à partir de la traverse (2) ouverte vers le bas est recourbée vers le haut à partir du plan de la traverse.

4. Essieu arrière pour véhicules automobiles selon les revendications 1 à 3, caractérisé en ce que seule une aile de profilé (4' ou 5') s'écarte vers l'avant ou vers l'arrière à partir de la traverse (2') ouverte vers le bas, sachant que l'aile latérale qui s'écarte est recourbée vers le haut soit dans le plan de la traverse, soit à partir du plan de la traverse.

5. Essieu arrière pour véhicules automobiles selon les revendications 1 à 4, caractérisé en ce que, dans le profilé filé d'aluminium de la traverse (2"), à côté des supports pour le bain de soudure (27"), sont réalisées d'autres rainures (28 et 29) afin d'y loger par exemple des câbles pour capteurs ABS ou des conduites de freinage.

6. Essieu arrière pour véhicules automobiles selon les revendications 1 à 5, caractérisé en ce que, dans le profilé filé d'aluminium de la traverse (2''') à la place des supports pour le bain de soudure (27, 27', 27"), sont réalisées des chambres (30) et des rainures (31 et 32), de manière à ce qu'elles forment des sections transversales permettant de réaliser un assemblage par collage au lieu d'un assemblage par soudage.

7. Essieu arrière pour véhicules automobiles selon les revendications 1 à 6, caractérisé en ce que la pièce moulée (8) du bras oscillant longitudinal (3) présente une moulure (9) dans laquelle est posé le câble du frein à main (10).
